# EUROPÄISCHE PATENTSCHRIFT

(11) **EP 4 203 748 B1**
(45) Veröffentlichungstag und Bekanntmachung des Hinweises auf die Patenterteilung: **11.06.2025**
(21) Anmeldenummer: 22700032.0
(22) Anmeldetag: 11.01.2022
(51) Int. Cl.: A46D 1/00, A46B 1/00, A46B 5/02, B24D 11/00

(54) **EINFACH REZYKLIERBARE BORSTENWARE**
EASILY RECYCLABLE BRUSHWARE
ARTICLES DE BROSSERIE FACILEMENT RECYCLABLES

(30) Priorität: 18.01.2021 EP 21152035
(43) Veröffentlichungstag der Anmeldung: 05.07.2023
(73) Patentinhaber: Evonik Operations GmbH, 45128 Essen (DE)
(72) Erfinder: HERMES, Florian, 45721 Haltern am See (DE); KANNENGIESSER, Uwe, 46509 Xanten (DE); RICHTER, Alexander, 45721 Haltern am See (DE); WIEDER, Kerstin, 48149 Münster (DE); KRAMPE, Johannes-Florian, 46286 Dorsten (DE)
(74) Vertreter: Evonik Patent Association
(86) Internationale Anmeldenummer: PCT/EP2022/050368
(87) Internationale Veröffentlichungsnummer: WO 2022/152659

(56) Entgegenhaltungen:
- EP-B1- 2 202 260
- WO-A1-2017/076839
- WO-A2-2021/069693
- ANONYMOUS: "Polyamide", WIKIPEDIA, 31 December 2019 (2019-12-31), XP055707208, Retrieved from the Internet <URL:https://de.wikipedia.org/wiki/Polyamide> [retrieved on 20200622]

## Beschreibung

Die vorliegende Erfindung betrifft Borstenware, die einfach rezykliert werden kann, da ihre Bestandteile das gleiche Material aufweisen oder aus diesem bestehen.

Im Stand der Technik wird allgemein eine Mehrzahl Materialien, zumindest aber eine Materialpaarung verwendet, um eine gewisse Haltbarkeit der Borstenware zu gewährleisten. Bei Zahnbürsten beispielsweise werden neben Kunststoff Metallplättchen an den Monofilen bzw. Borsten eingesetzt. Die gebündelten Borsten werden schlaufenförmig um diese Metallplättchen gebogen und in das Bohrloch des Kopfes der Borstenware eingepresst. Eine Alternative besteht darin, dass gebündelte Borsten mit fließendem Kunststoff ummantelt werden, um diese anschließend in dem bekannten Verfahren der Bündeleinspritzbesteckung in den Hohlräumen des Borstenkopfes zu verankern.

In einer Abwandlung dieser Vorgehensweise wird das Material der Borsten mit einem Basiskunststoff kombiniert, der bei Erwärmung plastisch wird. In der sogenannten Bündeleinfügebesteckung werden die Borstenbündel mit diesem Basiskunststoff ummantelt und in erhitztem Zustand in die Hohlräume des Kopfes gefügt.

Ein Überblick über diese Techniken findet sich z.B. in der Dissertation von Susanne Wurbs an der Medizinischen Fakultät der Georg-August-Universität zu Göttingen, 2011. Eine Veranschaulichung zeigt das Video "How Toothbrushes Are Made", https://.youtube.com/watch?v=i2pIIaI6HmU&feature=youtu.be.

Ein besonderer Problemkreis bei Borstenware aus Kunststoff ist deren Entsorgung. Denn obwohl die Reinhaltung unserer Umwelt seit Langem in dem Bewusstsein der Öffentlichkeit ist, liegt in der Rezyklierung von Polymeren noch immer eine große technische Herausforderung.

Eine Rezyklierung im Sinne einer werkstofflichen *Aufbereitung* findet sich nur bei 33 % aller Kunststoffe, dargelegt beispielsweise in einem Internet Artikel der Hunold + Knoop Kunststofftechnik, https://www.hunold-knoop.de/kunststoffwissen/kunststoffblog/details/kunststoff-recycling-3-methoden).

Dabei werden Altteile zerkleinert, gereinigt und nach Sorten getrennt. Metallische Anteile lassen sich über Schmelzfiltration, Schreddern, Abtrennen oder über eine Dichtetrennung entfernen. Thermoplastische Kunststoffe werden anschließend bei hoher Temperatur geschmolzen und neu aufbereitet.

Die Trennung nach Sorten allerdings ist umso aufwendiger, je mehr Sorten in dem zu rezyklierenden Gegenstand eingesetzt sind. Bei komplex zusammengesetzten Artikeln wie einer Zahnbürste ist die Trennung wirtschaftlich nicht machbar. Ohne Trennung nach Sorten rechnet man mit einer verminderten, zumindest sehr schwer steuerbaren Materialqualität des Gegenstandes aus rezykliertem Kunststoff.

Lediglich 1 % aller Kunststoffe werden im Rahmen der rohstofflichen Rezyklierung *wiederverwertet.* Bei solchen Verfahren werden die Polymerketten im Kunststoff aufgespalten. Dabei entstehen Monomere, Öle und Gase, die zu neuen Kunststoffen verarbeitet werden können. Dieses Verfahren eignet sich auch für vermischte und verschmutzte Materialien. Selbstverständlich ist die Aufspaltung von Polymerketten im Kunststoff von der Kombination unterschiedlicher Kunststoffe abhängig. Ein Beispiel dieser rohstofflichen Rezyklierung ist die unselektive thermochemische Herstellung von sogenanntem Pyrolyseöl, indem verflüssigte Polymere in einem Cracker umgesetzt werden (https://www.basf.com/global/de/who-weare/sustainability/we-drive-sustainable-solutions/circular-economy/mass-balanceapproach/chemcycling.html).

Beim sogenannten Monomer-Recycling werden Polymerketten durch selektive chemische Reaktionen in Monomereinheiten umgesetzt. Ein Beispiel dafür ist die Spaltung von Nylon 6 in das Monomer Caprolactam. Die Umsetzungsprodukte können nach Aufreinigung teilweise wieder polymerisiert werden.

Es ist bekannt, dass sich in einer im Prinzip homogenen Kunststoff-Matrix Einschlüsse anderer Polymere wie Fremdkörper verhalten. Denn viele Polymere sind gegeneinander chemisch unverträglich, gleichbedeutend damit, dass sie begrenzt Adhäsion entwickeln, wenn sie zusammengeführt und -geschmolzen werden. Weiterhin sind unterschiedliche Polymere in den meisten Fällen nicht miteinander mischbar. Gegebenenfalls müssen sogenannte "Verträglichmacher" eingesetzt werden, um eine gewünschte Zähmodifizierung zu erreichen.

Im Stand der Technik wird zumeist beobachtet, dass schon bei geringen Anteilen eines Kunststoffs in einem anderen Kunststoff die Eigenschaften des Matrix-Kunststoffes umso mehr herabgesetzt sind, je unterschiedlicher die chemische Struktur seiner Anteile ist. Je nach Art des eingeschlossenen bzw. beabsichtigt zugemischten Kunststoffanteils können auch völlig unbefriedigende Resultate auftreten.

So ist ganz allgemein beim Umgang mit Kunststoffabfällen die Sortenreinheit von steigendem Interesse. Auch die Forderung nach Reduktion der Vielfalt eingesetzter Kunststoffe gewinnt immer mehr an Bedeutung. Ein Überblick findet sich bei "Kunststoffe.de", https://www.kunststoffe.de/themen/basics/recycling/werkstoffliches-recycling/artikel/recyclingvon-mischkunststoffen-1 001658. html
In WO 2017/076839 A1 werden Körperflegebürsten mit gespritzten Borsten offenbart. Die Bestandteile der Bürsten können aus gleichen oder verschiedenen Komponenten bestehen. Der Wikipedia-Artikel "Polyamide" führt auf, dass Polyamide in Zahnbürsten, insbesondere Borsten, eingesetzt wird (Anonymous: Polyamide, Wikipedia, 31. Dezember 2019, https://de.wikipedia.org/wiki/Polyamide). In EP 2202260 B1 werden Polyamid-Elastomere und Formteile daraus beschrieben. Sie können beispielsweise als Bürsten verwendet werden. Darüber hinaus werden in der vorangemeldeten und nachveröffentlichten WO 2021/069693 A2 Mundhygienemittel wie Zahnbürsten offenbart.

Aufgabe der Erfindung war es also, Kunststoffgegenstände bereit zu stellen, die den oben genannten Forderungen und Problemstellungen Rechnung tragen. Darüber hinaus sollen Monofile oder Borsten ein Mindestmaß an Rückstellverhalten aufweisen und nicht brüchig sein.

Gegenstand der Erfindung ist somit eine Borstenware, aufweisend die Bestandteile:
- Monofile oder Borsten, und
- zumindest einen Kopf, Griff, und/oder Hals,
wobei die Bestandteile Polymere aus der gleichen Polmerklasse, ausgewählt aus Polymer, aufweisen oder aus diesem bestehen und wobei die Polymerklasse ausgewählt ist aus Polyamid, dadurch gekennzeichnet dass das Polymer ein Polymerisat aus den Monomeren w-Aminododecansäure und/oder Laurinlactam ist.

Die Erfindung wird im Folgenden näher erläutert.

Die erfindungsgemäße Borstenware kann an ihrem Kopf, am Griff, und/oder an ihrem Hals zumindest ein Grip-Element aufweisen, wobei das zumindest eine Grip-Element Polymere aus der gleichen Polymerklasse (z. B. Polyamid und Polyetherblockamid) wie die Bestandteile der Borstenware aufweist oder aus diesem besteht.

Vorzugsweise können die Bestandteile der Borstenware aus Polymer der gleichen Polymerklasse bestehen. Eine solche ideale Sortenreinheit vereinfacht das Rezyklieren in besonderem Maße.

Es kann weiterhin vorteilhaft sein, wenn das Polymer oder ein Copolymer der offenbarten Borstenware zusätzlich ausgewählt ist aus Polymerisaten der Monomere Hexamethylendiamin/Azelainsäure, Hexamethylendiamin/Dodecandisäure, 11-Aminoundecansäure Tetramethylendiamin/Adipinsäure, Dodecandiamin/Dodecandisäure, Caprolactam/Laurinlactam, Hexamethylendiamin/ Decandisäure, 1,10-Decamethylendiamin/1,10-Decandisäure.

Das Polymer der offenbarten Borstenware kann zusätzlich ausgewählt sein aus Polyethylenterephthalat (PET), säuremodifiziertem Polyethlyenterephthalat (PETA), glykolmodifiziertem Polyethlyenterephthalat (PETG), Polybutylenterephthalat (PBT), säuremodifiziertem Polycyclohexylendimethylenterephthalat (PCT-A) und glykolmodifiziertem Polycyclohexylendimethylenterephthalat (PCT-G).

Einige Materialien sind dem Fachmann auch bekannt unter den folgenden Bezeichnungen, die auch im Rahmen dieser Offenbarung verwendet werden.

### Polyamid aus:

| | |
|---|---|
| Hexamethylendiamin/Azelainsäure | PA6.9 |
| Hexamethylendiamin/Dodecandisäure | PA6.12 |
| 11-Aminoundecansäure | PA11 |
| Laurinlactam oder ω-Aminododecansäure | PA12 |
| Tetramethylendiamin/Adipinsäure | PA4.6 |
| Dodecandiamin/Dodecandisäure | PA12.12 |
| Caprolactam/Laurinlactam | PA6.12 |
| 1,10-Decamethylendiamin/1,10-Decandisäure | PA10.10 |
| Hexamethylendiamin/ Decandisäure | PA610 |
| Polyamid | PA |
| Polybutylenterephtalat | PBT |
| Polypropylene | PP |
| Polyetherblockamid | PEBA |

Ganz besonders bevorzugt kann die Borstenware gemäß der Erfindung eine Zahnbürste sein.

Anhand der nachfolgenden Beispiele wird die Erfindung näher erläutert.

In allen Beispielen wurden Zahnbürsten aus verschiedenen Materialien bzw. verschiedenen Materialkombinationen konventionellen Verfahren der Rezyklierung unterzogen. Dabei wurden jeweils die Eignung für mechanisches und chemisches Rezyklieren sowie die Haftung der Materialien bewertet.

Im Rahmen der Erfindung ist unter
- Eignung für das mechanische Recycling zu verstehen, dass ein weitestgehend sortenreines Polymer wiedergewonnen werden kann.
Eine "schlechte" Eignung ist gleichbedeutend damit, dass Mischungen unterschiedlicher Polymere bzw. unterschiedlich modifizierter Polymere vorliegen, die einen negativen Einfluss z. B. auf Farbe, mechanische Eigenschaften, Toxikologie haben.
- Eignung für das Monomer-Recycling zu verstehen, dass ein weitestgehend sortenreines Polymer wiedergewonnen werden kann. Da geringe Mengen Verunreinigungen abgetrennt werden können, kann das Verfahren prinzipiell breiter als ein mechanisches Recycling genutzt werden.
Eine "schlechte" Eignung bedeutet hier, dass aufgrund eingesetzter komplexer Materialmischungen aufwendige zusätzliche Trennschritte erforderlich sind.
- Haftung der Materialien zu verstehen, dass beide Materialien sich unter Beanspruchung nicht trennen lassen. Dies kann zum Beispiel nach einem Zugversuch nach DIN EN ISO 527 getestet werden.
- Reinigungswirkung zu verstehen, dass mit der Borstenware technisch die erforderliche Steifigkeit von weich bis hart abgebildet werden kann. Das Rückstellverhalten der Borsten erfüllt die Anforderungen und die Borsten ermüden im Vergleich zu anderen Materialien langsamer.
- Eignung zur Filamentextrusion zu verstehen, dass geringe Filamentdurchmesser für Borstenware ohne Filamentabriss in der Produktion hergestellt werden können. Teilkristalline Thermoplaste ermöglichen bei der Filamentextrusion das Recken zur Verfestigung des Materials in Kraftrichtung.
- Bruchbeständigkeit zu verstehen, dass die Borstenware nicht spröde ist und auch nach langer Nutzung beim Zähneputzen nicht bricht.

### Bezugsquellen für

| | |
|---|---|
| PA612: | VESTAMID^{®} D16, Evonik; |
| PA12: | VESTAMID^{®} LX9039, Evonik; |
| SEBS: | Delene 1010, Lingen Plastic Rubber; |
| PMMA: | ACRYLITE^{®} SuPure, Röhm; |
| PC: | 4Lex 10F10000, 4Plas; |
| PS: | ACLCOM MED PS, MOCOM; |
| PBT: | VESTODUR 2000, Evonik. |

**Vergleichsbeispiele 1** - **6.** Zahnbürste aufweisend jeweils eine Materialkombination aus PA6.12 und PP, PA6.12 und PET, PA6.12, PP und Blockcopolymer aus Styrol-Ethylen-Butylen-Styrol (SEBS), PA6.12 und PE, PA612 und PU, PA6.12 und PA12.

**Vergleichsbeispiele 7 - 9.** Zahnbürste, deren Borsten und Griff jeweils aus dem gleichen Material: PMMA, PS bzw. SEBS bestehen. Wobei die Borstenware keine ausreichend guten Eigenschaften aufweist.

**Beispiele 1** - **3.** Zahnbürste, deren Borsten, Kopf, Griff und Hals jeweils aus dem gleichen Polymer: PA6.12 bzw. PA12 bzw. PBT bestehen. Beispiele 1 und 3 sind Vergleichsbeispiele.

**Beispiele 4 und** 5. Zahnbürste, deren Borsten, Kopf, Griff und Hals jeweils aus dem gleichen Polymer, nämlich PBT bzw. PA12 bestehen und die zusätzlich ein Grip-Element aus PEBA, basierend auf PA12, bzw. aus PEBA, basierend auf PA6.12, aufweist. Die Bewertungen sind in der Tabelle 1 zusammengefasst. Den Zeichen ist folgende Bedeutung zugeordnet:

| | |
|---|---|
| "-" | "schlecht" |
| "+" | "gut" |
| "s" | "zu spröde" |
| "b" | "nur bedingt" |
| "w" | "zu weich" |

**Tabelle 1. Bewertungen der Rezyklierbarkeit der Zahnbürste, der Haftung der Materialien sowie Bewertung des Materials als Borstenware.**

| | Borsten | Kopf, Griff und Hals | Grip-Element | Eignung mechanisches Recycling | Eignung Monomer Recycling | Haftung der Materi alien | Reinigungs wirkung | Eignung zur Filamentextrusion | Bruch beständigkeit |
|---|---|---|---|---|---|---|---|---|---|
| Vergleichsbeispiel 1 | PA6.12 | PP | | - | - | - | + | + | + |
| Vergleichsbeispiel 2 | PA6.12 | PET | | - | - | - | + | + | + |
| Vergleichsbeispiel 3 | PA6.12 | PP | SEBS | - | - | - | + | + | + |
| Vergleichsbeispiel 4 | PA6.12 | PE | | - | - | - | + | + | + |
| Vergleichsbeispiel 5 | PA6.12 | PU | | - | - | - | + | + | + |
| Vergleichsbeispiel 6 | PA6.12 | PA12 | | - | - | - | + | + | + |
| Vergleichsbeispiel 7 | PMMA | PMMA | | + | + | + | s | b | - |
| Vergleichsbeispiel 8 | PS | PS | | + | + | + | s | b | - |
| Vergleichsbeispiel 9 | SEBS | SEBS | | + | + | + | w | b | - |
| Beispiel 1* | PA6.12 | PA6.12 | | + | + | + | + | + | + |
| Beispiel 2 | PA12 | PA12 | | + | + | + | + | + | + |
| Beispiel 3* | PBT | PBT | | + | + | + | + | + | + |
| Beispiel 4 | PA12 | PA12 | PEBA (PA12) | + | + | + | + | + | + |
| Beispiel 5 | PA6.12 | PA6.12 | PEBA (PA6.1 2) | + | + | + | + | + | + |

| | | | | | | | | | |
|---|---|---|---|---|---|---|---|---|---|
| * Vergleichsbeispiele | | | | | | | | | |

## Patentansprüche

1. Borstenware, aufweisend die Bestandteile:
- Monofile oder Borsten, und
- zumindest einen Kopf, Griff, und/oder Hals,
wobei die Bestandteile Polymere aus der gleichen Polymerklasse, ausgewählt aus Polymer, aufweisen oder aus diesem bestehen und wobei die Polymerklasse ausgewählt ist aus Polyamid, **dadurch gekennzeichnet dass** webeidas Polymer ein Polymerisat aus den Monomeren ω-Aminododecansäure und/oder Laurinlactam ist.

2. Borstenware nach Anspruch 1, wobei der Kopf, Griff, und/oder Hals zumindest ein Grip-Element aufweist und das zumindest eine Grip-Element Polymere aus der gleichen Polymerklasse wie die Bestandteile aufweist oder aus diesem besteht.

3. Borstenware nach Anspruch 1 oder 2, wobei die Bestandteile aus Polymer der gleichen Polymerklasse bestehen.

4. Borstenware nach einem der vorhergehenden Ansprüche, wobei die Borstenware eine Zahnbürste ist.

## Claims

1. Brushware comprising the constituents:
- monofilaments or bristles and
- at least one head, handle and/or neck,
wherein
the constituents comprise or consist of polymers from the same polymer class selected from polymer and wherein the polymer class is selected from polyamide, **characterized in that**
the polymer is a polymer derived from the monomers ω-aminododecanoic acid and/or laurolactam.

2. Brushware according to Claim 1, wherein the head, handle and/or neck has at least one grip element and the at least one grip element comprises or consists of polymers from the same polymer class as the constituents.

3. Brushware according to Claim 1 or 2, wherein the constituents consist of polymer of the same polymer class.

4. Brushware according to any of the preceding claims, wherein the brushware is a toothbrush.

## Revendications

1. Article de brosserie, présentant les constituants suivants :
- des monofilaments ou des soies, et
- au moins une tête, un manche et/ou un cou,
dans lequel
les constituants présentent des polymères de la même classe de polymères, choisis parmi les polymères, ou sont constitués de ceux-ci, et la classe de polymères est choisie parmi les polyamides, **caractérisé en ce que**
le polymère est un polymère des monomères acide ω-aminododécanoïque et/ou lactame de laurine.

2. Article de brosserie selon la revendication 1, dans lequel la tête, le manche et/ou le col présente au moins un élément de préhension et l'au moins un élément de préhension présente des polymères de la même classe de polymères que les constituants ou est constitué de ceux-ci.

3. Article de brosserie selon la revendication 1 ou 2, dans lequel les constituants sont constitués de polymère de la même classe de polymère.

4. Article de brosserie selon l'une quelconque des revendications précédentes, dans lequel l'article de brosserie est une brosse à dents.
